# EUROPEAN PATENT APPLICATION

(11) **EP 4 557 138 A1**
(43) Date of publication of application: **21.05.2025**
(21) Application number: 23838629.6
(22) Date of filing: 14.06.2023
(51) Int. Cl.: G06F 21/55, G06F 13/20

(54) **INTERFACE-DETECTION-BASED EXTERNALLY-CONNECTED PROTECTION DEVICE AND METHOD**

(30) Priority: 11.07.2022 CN 202210807836
(71) Applicant: Beijing Beyondinfo Technology Co., Ltd., Beijing 100020 (CN)
(72) Inventor: ZHANG, Hao, Beijing 100007 (CN); DU, Hua, Beijing 100007 (CN); CAI, Zhenhe, Beijing 100007 (CN); ZHAO, Kai, Beijing 100007 (CN); LI, Xin, Beijing 100007 (CN)
(74) Representative: Bandpay & Greuter
(86) International application number: PCT/CN2023/100142
(87) International publication number: WO 2024/012135

(57) **Abstract**

The present invention provides an interface-detection-based externally-connected protection device and a corresponding method. An internal interface of the device is connected to a protected device, an external interface is connected to an external device needing to access the protected device, and the external interface is in one-to-one correspondence connection to the internal interface by means of a switch module. At least two of the external interfaces are used for connecting to a predetermined data transmission type of external device, and each internal interface is used for one-to-one connection to all of the external interfaces of the protected device. The present invention detects the type of external device connected to any external interface of an externally-connected protection device, and, according to the detection result, instructs a switch device to connect or disconnect the external interface to/from a corresponding internal interface, and perform an alert operation. The present invention utilizes a DIDU technique, which helps in adopting specialized targeted security protection measures for various types of external devices.

## Description

### CROSS-REFERENCE TO RELATED APPLICATION

This application claims the benefit of Chinese Patent Application No. 202210807836.7, filed on Jul. 11, 2022 in the China National Intellectual Property Administration, the disclosure of which is incorporated herein by reference.

### BACKGROUND OF THE INVENTION

### 1. Technical field

The present invention relates to the field of device information security protection technology, and particularly relates to an externally connected protection device and method according to interface detection.

### 2. Background technology

In recent years, the development of computer and network technology has greatly promoted the popularity of the internet. However, while people enjoy the convenience brought by the internet, they also face new threats to network security and data security. Common threats include malicious code intrusion, virus/Trojan infection, traffic attacks, hacker theft, unauthorized access, impersonating legitimate users, disrupting data integrity, interfering with normal system operation, spreading viruses through the network, man in the middle eavesdropping, and so on.

There are many technical means to solve network security or data security issues, such as installing and using blacklists/whitelists in hosts, using traffic control software, firewalls, antivirus intrusion detection systems, and other network security products. However, even with the aforementioned measures, various security incidents still occur frequently. According to statistics, over 80% of security issues are caused by internal personnel illegally using critical resources such as hosts, while the actual threat from external sources is less than 20%. Internal personnel lack security awareness when using the host, and are located at the back end of the firewall. They access various external devices irregularly and are implanted with viruses or Trojan backdoors, leading to data leaks, virus infections, system crashes, and even network paralysis; At the same time, misoperation or intentional damage to the system can also cause adverse effects and significant losses.

Moreover, for certain special device, such as hosts equipped with special software controls and equipment for engineer/worker stations in certain industrial fields, there is no compatible security protection software on the market, or installing security software can easily cause compatibility issues with the host's original software, and even affect performance. After the host of these engineer/worker stations goes online, they will not upgrade the operating system or install any security protection software; Even if security protection software is installed, it often fails to update software versions or malicious code libraries in a timely manner, resulting in low effectiveness and efficiency of security protection.

Therefore, an externally-connected terminal protection device (also known as an externally-connected protection device or external protection device) and corresponding protection system (WO2020087781A1) have been disclosed in the prior art to solve the above problems. This Externally-connected protection device (EPD) takes over the various external interfaces of the Protected Device (PD), ensuring that external devices that need to access various external interfaces of the protected device must be connected to the EPD in order to access them, thus achieving the purpose of protecting the protected device without installing security protection software on it.

However, for certain interfaces, they widely support various types of external devices, such as USB interfaces. For external devices that support the same interface standard but have different signal or content transmission modes, the patterns of the risk they bring when connected to PD through EPD may be different. Therefore, specialized and device type adapted security protection should be implemented according to the specific type of external device to effectively improve the level of security protection. However, existing EPDs are still unable to achieve this.

### SUMMARY OF THE INVENTION

The present invention aims to solve the technical problem that existing security protection solutions cannot provide specialized and adaptable security protection for different types of external devices.

In order to solve the above technical problems, the present invention proposes an externally-connected protection device according to interface detection, comprising an internal interface, an external interface, and a switch module. The internal interface is used to connect the protected device, and the external interface is used to connect the external device that needs to access the protected device. The external interface is in one-to-one correspondence connection to the internal interface through a switch module, and at least two of the external interfaces are used to connect predetermined data transmission types of external devices; The type and quantity of the internal interfaces are compatible with the type and quantity of the external interfaces, and each internal interface is used for one-to-one connection to all external interfaces of the protected device; The external protective device also includes a device type detection module and an alarm module; The device type detection module is used for detecting the type of external device connected to any external interface, and sending an alarm instruction to the alarm module according to the detection result, instructing the switch module to connect or disconnect the external interface with the corresponding internal interface; The alarm module is used for performing alarm operations according to the received alarm instructions.

According to the preferred embodiment of the present invention, the device type detection module is used for: when the detected type of external device is inconsistent with the predetermined data transmission type of the external interface, instructing the switch module to disconnect the connection between the external interface and the corresponding internal interface, and sending an alarm instruction to the alarm module; When the detected type of external device matches the predetermined data transmission type of the external interface, instructing the switch module to connect the external interface with the corresponding internal interface.

According to the preferred embodiment of the present invention, the externally-connected protection device further comprises a content monitoring module for auditing the data content from the external interface, and instructing the switch module to connect or disconnect the external interface with the corresponding internal interface according to the content auditing result.

According to the preferred embodiment of the present invention, the content monitoring module comprises a mirror module and a data analysis module. The mirror module is used for mirroring and storing the PASS-THROUGH data from the external interface, and the data analysis module is used for data analysis of all data from the external interface and sending alarm instructions to the alarm module according to the analysis results.

According to the preferred embodiment of the present invention, the external interface comprises a TRANSFER-THROUGH serial external interface and a PASS-THROUGH serial external interface, and the internal interface comprises a TRANSFER-THROUGH serial internal interface and a PASS-THROUGH serial internal interface that correspond one-to-one with the TRANSFER-THROUGH serial external interface and the PASS-THROUGH serial external interface; The data analysis module is used for analyzing data from the t TRANSFER-THROUGH serial external interface, and send alarm instructions to the alarm module according to the analysis results.

According to the preferred embodiment of the present invention, the mirror module is used for mirroring and storing the PASS-THROUGH data from a PASS-THROUGH serial external interface; the data analysis module is also used to analyze the PASS-THROUGH data of the PASS-THROUGH serial external interface, and send alarm instructions to the alarm module according to the analysis results.

According to the preferred embodiment of the present invention, the external interface comprises a USB external interface, and the internal interface comprises a USB internal interface corresponding one-to-one with the USB external interface. The predetermined data transmission type of each USB external interface is the same as the type of USB external interface of the protected device connected to the corresponding USB internal interface.

According to the preferred embodiment of the present invention, the USB external interface comprises at least two predetermined data transmission types: storage type USB external interface, HID type USB interface, and non storage non HID type USB interface.

According to the preferred embodiment of the present invention, the external interface comprises a network external interface, and the internal interface comprises a network internal interface connected to the network external interface.

According to the preferred embodiment of the present invention, it is used to perform legality detection on data received from the external interface of the network and send it to the internal interface of the network.

According to the preferred embodiment of the present invention, the externally-connected protection device further comprises a plugged and unplugged detection module for detecting whether the data lines or devices connected to each external interface are unplugged, detecting whether the data lines connected to the internal interface are unplugged, and detecting whether the data lines connected to the internal interface are unplugged from the protected device, and sending an alarm command to the alarm module after detecting the unplugged status.

Another aspect of the present invention proposes an externally-connected protection method according to interface detection, comprising the following steps: using an externally-connected protection device to take over all external interfaces of the protected device, so that each pair of internal interfaces of the externally-connected protection device is connected one-to-one to all external interfaces of the protected device; Connecting the external and internal interfaces of the external protective device one-to-one through switch modules, so that the type and quantity of the internal interfaces of the external protective device are compatible with the type and quantity of the external interfaces; Determining at least two external interfaces for connecting predetermined data transmission types of external devices; Detecting the data transmission type of external device connected to any external interface of the external protective device, and instructing the switch module to connect or disconnect the external interface with the corresponding internal interface according to the detection result; Performing alarm operation according to the detection results.

According to the preferred embodiment of the present invention, when the data transmission type of external device obtained by detection is inconsistent with the predetermined data transmission type of the external interface, the switch module is instructed to disconnect the external interface from the corresponding internal interface and perform an alarm operation; When the data transmission type of external device obtained by detection matches the predetermined data transmission type of the external interface, the switch module is instructed to connect the external interface with the corresponding internal interface.

According to the preferred embodiment of the present invention, the method further comprises: auditing the data content from the external interface, and instructing the switch module to connect or disconnect the external interface with the corresponding internal interface according to the content auditing result.

According to the preferred embodiment of the present invention, the step of auditing the data content from the external interface comprise: mirroring and storing the PASS-THROUGH data from the external interface, analyzing all data from the external interface, and performing alarm operations according to the analysis results.

According to the preferred embodiment of the present invention, the method further comprises: detecting whether the data lines or devices connected to each external interface are unplugged, detecting whether the data lines connected to the internal interface are unplugged, and detecting whether the data lines connected to the internal interface are unplugged from the external interface of the protected device, and performing an alarm operation after an unplugged status is detected.

The externally-connected protection device of the present invention can control the connection of corresponding predetermined data transmission types of external devices on different external interfaces, realize a DEDICATED INTERFACE DEDICATED USE (DIDU)solution, and reduce security risks caused by incorrect connection of external device interfaces.

The externally-connected protection device of the present invention is based on DEDICATED INTERFACE DEDICATED USE (DIDU) and can adopt specialized and targeted safety protection measures for different data transmission types of external devices, improving safety protection performance.

### BRIEF DESCRIPTION OF DRAWINGS

Figure 1A is a schematic diagram of the structure of a first embodiment of an externally-connected protection device based on interface detection according to the present invention.
Figure 1B is a schematic structural diagram of a modified embodiment of the first embodiment of an externally-connected protection device based on interface detection according to the present invention.
Figure 2 is a schematic diagram of the structure of a second embodiment of an externally-connected protection device based on interface detection according to the present invention.
Figure 3 is a schematic diagram of the structure of a third embodiment of an externally-connected protection device based on interface detection according to the present invention.
Figure 4 is a schematic diagram of the structure of a fourth embodiment of an externally-connected protection device based on interface detection according to the present invention.

### DETAILED DESCRIPTION

As mentioned above, for interfaces with strong universality such as USB interfaces, they can connect to various types of external devices. In order to provide specialized and adaptable security protection based on the specific type of external device, and effectively improve the level of security protection, the present invention proposes to adopt a DIDU solution on Externally-connected protection devices (EPDs). It should be noted that the so-called DIDU in the present invention does not refer to connecting devices with different interface standards to corresponding interfaces in a general sense, but for devices of different data transmission types with the same interface standard, to connect to the interfaces with the same interface standard but different predetermined data transmission types. For example, for USB interfaces, there are various types of devices that comply with the USB interface standard, including storage devices (such as USB drives, portable hard drives, etc.), HID devices (such as mouse, keyboard, game controller, etc.), and non storage non HID devices (encryption dongles, etc.). Obviously, it is not appropriate to use the same security measures for different types of USB devices. Therefore, the present invention specifies in an externally-connected protection device (EPD) that each different external interfaces should be connected to a specific type of external device. And, in order to ensure that the type of connected device is correct, the present invention detects the type of external device connected to determine whether it has been connected to the corresponding predetermined data transmission type of external device, and performs connecting-disconnecting control based on the detection result, so that only external devices that match the predetermined data transmission type can be connected to the protected device. Due to the inability of external devices with mismatched types to be connected to the protected device through externally-connected protection devices, the present invention can reduce the security risks caused by incorrect interface connections of external devices.

On the other hand, due to the above-mentioned solution, the externally-connected protection device of the present invention can control the connection of corresponding predetermined data transmission types of external devices on different external interfaces. Therefore, the externally-connected protection device of the present invention can provide specialized and targeted security protection for different types of external devices.

In order to make the purpose, technical solution, and advantages of the present invention clearer and more understandable, the following will provide further detailed explanations of the present invention in conjunction with specific embodiments and with reference to the accompanying drawings.

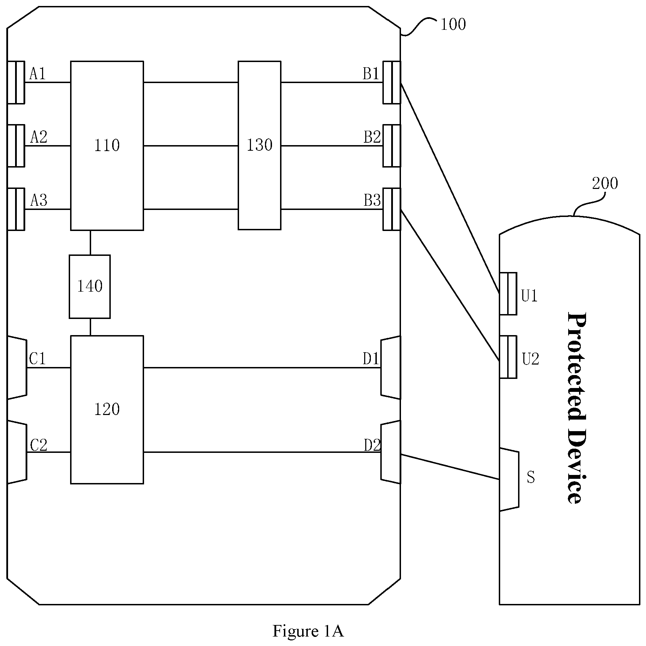

Figure 1A is a schematic diagram of the structure of a first embodiment of an externally-connected protection device based on interface detection according to the present invention. As shown in Figure 1A, the externally-connected protection device 100 of this embodiment is used to take over interfaces of the protected device 200 for safety protection. The external protective device 100 includes internal interfaces, external interfaces, and a switch module 130. The internal interfaces comprise internal USB interfaces B1, B2, and B3, and internal serial interfaces D1 and D2. The corresponding external interfaces comprise external USB interfaces A1, A2, and A3, and external serial interfaces C1 and C2. The internal interface is used to connect the protected device 200, and the external interface is used to connect external devices that need to access the protected device. The external interfaces A1, A2, A3, C1, and C2 are connected one-to-one with the internal interfaces B1, B2, B3, D1, and D2 through the switch module 130.

It should be noted that the external interfaces and the internal interfaces are in one-to-one connection and have a determined correspondence relationship. That is, the external interfaces A1, A2, A3, C1, and C2 are respectively connected to the internal interfaces B1, B2, B3, D1, and D2. The switch module 130 only plays a role in connecting-disconnecting control and does not have the function of mutual transmission. This is the basis for implementing the DIDU of the present invention.

As mentioned above, in this embodiment, there are five external interfaces and five internal interfaces, which correspond one-to-one. But this is only an example, and the present invention does not limit the number of external and internal interfaces. However, it is necessary to ensure that every internal interface has a unique corresponding external interface, and every external interface has a unique corresponding internal interface. Since there is no need to set such a correspondence relationship in the scheme of only one external interface and one internal interface, the present invention is only applicable to embodiments where there are two or more external interfaces (and therefore two or more internal interfaces).

According to the present invention, internal interfaces are used for one-to-one connection of all interfaces of the protected device. In other words, every interface on the protected device is taken over by the externally-connected protection device of the present invention, and there are no interfaces on the protected device that have not been taken over. This is to ensure that all interfaces of the protected device are under the protection of the externally-connected protection device of the present invention without any omissions, so as to prevent external devices from directly inserting into the protected device 200 and causing security risks.

According to the present invention, the USB external interface in this embodiment is used for connecting a predetermined data transmission type of external device. As mentioned above, the so-called predetermined data transmission type refers not only to the standard adopted by the interface, but also to the data transmission type of external devices that support the same interface standard. In this embodiment, three USB external interfaces A1, A2, and A3 are respectively predetermined to connect storage type USB external devices (such as USB flash drives, portable hard drives, etc.), HID type USB external devices (such as mouse, keyboard, game controller, etc.), and non storage non HID type USB external devices (encryption dongles, etc.). Due to the unclear differentiation of the types of serial interface devices, in this embodiment, for the two serial external interfaces C1 and C2, the type of external devices to be connected are not predetermined.

Due to the one-to-one correspondence between internal and external interfaces, in this embodiment, internal interfaces B1, B2, and B3 are designated as predetermined data transmission types of interfaces. Specifically, the three USB internal interfaces B1, B2, and B3 are also predetermined to connect storage type USB external devices (such as USB flash drives, portable hard drives, etc.), HID type USB external devices (such as mice, keyboards, game controllers, etc.), and non storage non HID type USB external devices (such as encryption dongles, etc.).

To attract user attention, labels with predetermined data transmission type information can be attached near the interface. Whether for internal or external interfaces, easily recognizable indicators such as labels can be set near the interface.

In this embodiment, since the internal interfaces B1, B2, and B3 all have predetermined data transmission types, when the protected device 200 is connected to them, the interface of the protected device 200 that they take over can be selected and connected to base on the predetermined interface types of the internal interfaces B1, B2, and B3. Of course, if the external interface of the protected device does not specify a specific type of external device, the internal interface of the externally-connected protection device 100 can be connected to any external interface of the protected device as long as its interface standard is adapted. However, it should be noted that, as mentioned above, in order to provide comprehensive and effective protection, all interfaces of the protected device 200 should be taken over by the externally-connected protection device 100.

In this embodiment, the USB interfaces U1 and U2 of the protected device 200 are not predetermined to be connected to the types of external devices, so they can be connected to the internal interfaces B1 and B3 of the externally-connected protection device 100 respectively. However, in reality, the USB interfaces U1 and U2 can be connected to any two of the internal interfaces B1, B2, and B3. In addition, for the serial interface S of the protected device 200, it is connected to the serial internal interface D2 of the externally-connected protection device 100. Similarly, it can also be connect to the serial internal interface D1.

Referring again to Figure 1A, the externally-connected protection device of this embodiment further includes a device type detection module 110 and an alarm module 140. The device type detection module 110 is used for detecting the type of external device connected to any external interface, sending an alarm instruction to the alarm module 140 according to the detection result, and instructing the switch module 130 to connect or disconnect the external interface with the corresponding internal interface. The alarm module 140 is used for performing alarm operations according to the received alarm instructions.

The device type detection module 110 can be implemented by an electronic device with data processing capabilities, such as DSP, MCU, PLC, or FPGA. Its basic function is to connect with various USB external interfaces A1, A2, A3, and determine whether a USB external device has been connected based on changes of the current or voltage of the pins of the external interfaces. When it is detected that a USB external device has been connected, the type of the connected USB external device is determined. Specifically, there are usually several ways to make judgments, one way is to directly read the type information of the USB external device, including the device subtype, VID, PID, serial number and other information, and determine the type of the USB external device according to the type information of the USB external device. In the other way, the USB external device is tested and communicated, the protocol adopted by the USB external device during communication is analyzed, and the device subtype, VID, PID, serial number and other information included in the protocol data are obtained, so as to determine the type of the USB external device. In addition, the switch module 130 can also be first connected to the external interface and the corresponding internal interface corresponding to the USB external device, so that the USB external device is connected with the protected device, and the protocol communication data between the USB external device and the protected device are monitored, and information such as the equipment subtype, VID, PID, and serial number is obtained, so that the type of the USB external device is judged.

When the device type detection module 110 detects the type of USB external device connected to any one of the USB external interfaces A1, A2, A3, it compares the detected type with the predetermined data transmission type of the USB external interface to determine whether the two are consistent. For example, the predetermined data transmission type of USB external interface A1 is USB storage type external devices. If the user connects the USB mouse to the USB external interface A1, the device type detection module 110 determines that the type of external device it is connected to does not match, and sends an alarm instruction to the alarm module 140. At the same time, it instructs the switch module 130 to maintain the disconnection between the external interface and the corresponding internal interface. The alarm module 140 performs an alarm operation after receiving the alarm instruction, the alarm operation can be any form of action that attracts the user's attention, including sound, light, and electricity, such as a buzzer.

Preferably, the device type detection module 110 is also used to determine the legality of external devices that are connected. The so-called legality is relative to the illegal operation of illegal devices. Illegal devices generally refer to external devices disguised as USB external devices with some hidden functions, which often pose risks to the protected devices. The present invention can integrate the function of detecting the legality of devices in the device type detection module 110, such as writing corresponding programs in DSP. As an example, the device type detection module 110 detects whether the external device connected to the USB external interface A2 is an HID type USB external device. For example, when a mouse is connected to the external interface A2, the device type detection module 110 determines that it belongs to the HID type USB external device. At this point, the device type detection module 110 then starts a legality detection program to check the legality of the mouse, such as performing protocol analysis to determine whether the external device is a legitimate HID keyboard and mouse device. The switch module 130 controls the connection or disconnection of the internal interface B2 and the external interface A2 according to the judgment result of the device type detection module 110, in order to prevent illegal HID keyboard or mouse devices from connecting to the protected device 200. In this way, pretended or illegal HID keyboard or mouse devices cannot connect to the internal interface B2, fundamentally preventing unauthorized personnel from illegally accessing protected devices by pretended or fake HID keyboard and mouse devices.

In this preferred embodiment, since the USB external interface and USB internal interface of the present invention are DIDU, the legality judgment of HID devices can be performed only for a certain interface, for example, in this embodiment, only for external devices connected to the external interface B2. Therefore, the legality judgment program of HID devices can also be independently executed as a separate hardware module.

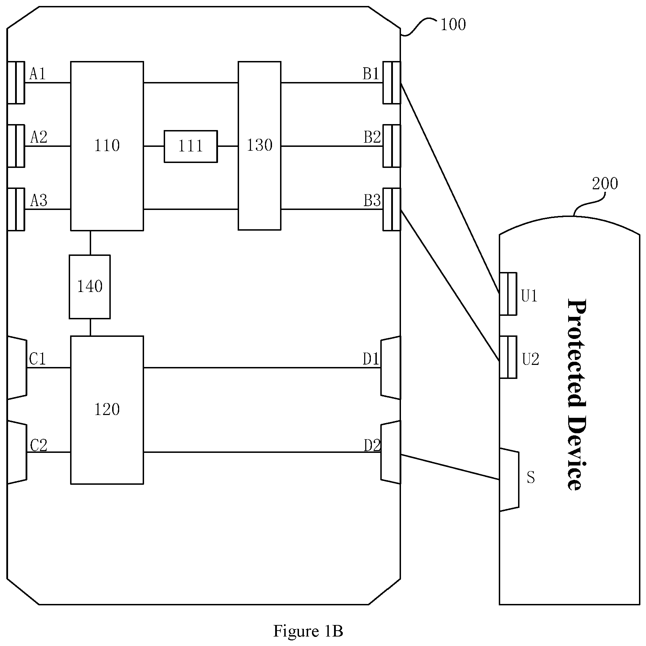

Figure 1B is a schematic structural diagram of a modified embodiment of the first embodiment of an externally-connected protection device based on interface detection according to the present invention. As shown in Figure 1B, the legality detection module 111 is located between the USB external interface A2 and the USB internal interface B2, dedicated to detecting the legality of HID class USB external devices connected to the USB external interface A2. The switch module can control the connecting-disconnecting of USB external interface A2 and USB internal interface B2 based on the detection results of the legality detection module 111. When the legality detection module 111 detects that the corresponding external device is illegal, it sends an alarm instruction to the alarm module 140 through the device type detection module 110. Of course, as an alternative, the legality detection module 111 can also be directly connected to the alarm module 140 to send alarm instructions directly to the alarm module 140.

The advantage of separating the legality detection module 111 is that it can reduce the complexity of the device type detection module 110, allowing it to be implemented by low-cost and highly reliable data processing devices. Meanwhile, as the present invention is of DIDU, the legality detection module 111 only needs to be connected to a specific line, never need to connect to all possible interfaces, thus reducing the complexity of its hardware circuit. Meanwhile, as the legality detection module 111 is specifically designed for HID devices, its single functionality makes it very convenient to optimize its hardware or software. The reduction of device complexity and the improvement of targeted functionality are both beneficial for enhancing the security of externally-connected protection devices themselves.

The structure shown in Figure 1B is a modified implementation of the first embodiment of the present invention, but the present invention is not limited to this modification. In fact, for any interface of DIDU in the present invention, a dedicated security processing module corresponding to a specific type of external device can be added in the device type detection module 110, or independently of the device type detection module 110. For example, for the USB external interface A1, a security protection module for storage type USB external devices can also be specifically added, such as a content detection module for security detection of the content of USB storage devices. It can be seen that the present invention enables a "one dedicated safety protection approach for one dedicated interface type" due to the design of a DIDU interface, which is the basis for upgrading and improving the functionality of external protective device.

Returning to Figure 1A, as mentioned earlier, the external and internal interfaces correspond one-to-one and have a fixed correspondence. For the serial external interfaces C1 and C2, they are respectively connected to the serial internal interfaces D1 and D2. For USB interfaces, the types of devices that support the USB standard protocol can vary. However, for serial interfaces, for serial interfaces, although the serial standards are different, there are 9-pin interfaces and 25-pin interfaces, but no matter what kind of serial interface devices are used, they all transmit data in a serial mode. In order to enable the serial standard protocol supported by the external device to be adapted to the corresponding serial interface on the protected device 200 through the externally-connected protection device 100, the interconnected serial external interface and serial internal interface support the same serial standard protocol. That is, the serial external interface C1 and the serial internal interface D1 support the same serial standard protocol, and the serial external interface C2 and the serial internal interface D2 support the same serial standard protocol.

The externally-connected protection device 100 of the first embodiment further includes a serial detection module 120. The serial detection module 120 is used to detect the connection status of the serial external interfaces C1 and C2, and send alarm message to the alarm module 140 based on changes in the connection status. In this first embodiment, the serial port detection module 120 is only used to detect whether the serial external devices connected to the serial external interfaces C1 and C2 have been unplugged in the powered status. If it is detected that the serial external interfaces C1 and C2 have been unplugged, an alarm message will be sent to the alarm module 140. The alarm message sent by the serial detection module 120 and the device type detection module 110 can be the same or different. When the message sent by the two is different, the alarm module 140 can generate different alarm operations based on the different alarm message, such as different beeps.

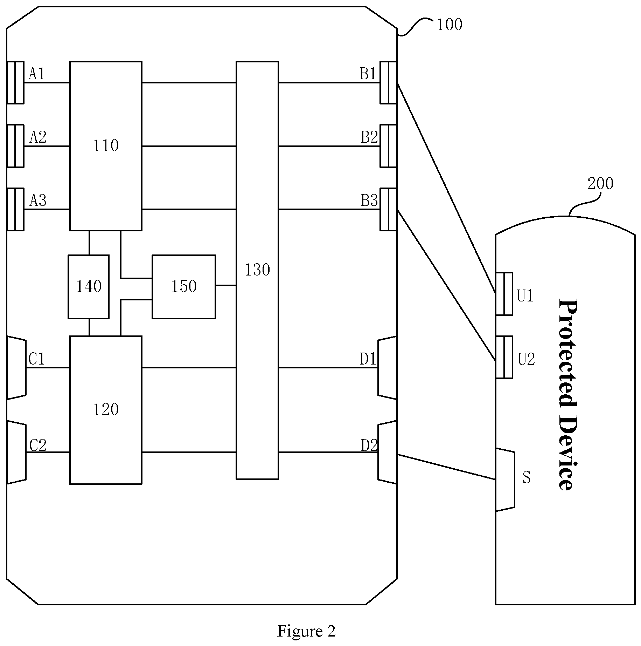

Figure 2 is a schematic diagram of the structure of the first embodiment of an externally-connected protection device based on interface detection according to the present invention. In the first embodiment described earlier, the serial detection module 120 does not detect the type of serial external device connected to the serial external interfaces C1 and C2, as the type of the serial external device itself is usually not directly related to its data transmission mode. However, regardless of which serial standard protocol the serial interface device supports, its data transmission mode can usually be divided into two types: PASS-THROUGH and TRANSFER-THROUGH. It is meaningful to implement different security measures for these two data transmission modes. Therefore, the serial detection module 120 of the second embodiment of the present invention is also used to detect the data transmission mode of the serial interface devices connected to the serial external interfaces C1 and C2, and perform different processing according to the data transmission mode.

The externally-connected protection device of the second embodiment further includes a content monitoring module 150, which is used to audit the data content from the external interface and instruct the switch module to connect or disconnect the external interface with the corresponding internal interface according to the content audit result. When auditing the data content, it is necessary to process the data of the PAS S-THROUGH and the data of the TRANSFER-THROUGH separately, and control the connecting-disconnecting of connection line by the switch module 130 based on the audit results. Therefore, as shown in Figure 2, the switch module 130 of this embodiment is also used for controlling the connecting-disconnecting status of the data line of the serial interface.

In this embodiment, the content monitoring module 150 is a comprehensive data content auditing module that not only audits data content from USB interfaces, but also audits data content from serial interfaces. The present invention is not limited to the specific data auditing method of the content monitoring module 150, and any existing data auditing method can be applied to the present invention. The goal of data content auditing is to determine whether the data content poses a security risk to the protected device, such as whether the data contains viruses, Trojans, malicious operation instructions, illegal operation instructions, etc. In order to efficiently perform data content auditing, the content monitoring module 150 is preferably implemented as an independent hardware module, such as in this embodiment. However, the present invention is not limited to this, and the content monitoring module 150 can also be implemented as a sub-module of other data processing modules, or as a computer program executed in other data processing devices.

As shown in Figure 2, in this second embodiment, the content monitoring module 150 includes a mirroring module and a data analysis module. The mirroring module is used to mirror and store the PASS-THROUGH data from the external interface, and the data analysis module is used to analyze all data from the external interface and send alarm instructions to the alarm module 140 based on the analysis results. As mentioned earlier, the serial detection module 120 of the second embodiment is also used to detect the data transmission mode of the serial interface devices connected to the serial external interfaces C1 and C2, and perform different processing according to the data transmission mode. Therefore, further, when the serial detection module 120 detects that the serial interface device connected to the serial external interface C1 or C2 is transmitting data in PASS-THROUGH mode, the mirroring module stores the PASS-THROUGH data in a mirroring manner, and then the data analysis module analyzes the mirrored data. When the serial detection module 120 detects that the serial interface device connected to the serial external interface C1 or C2 is transmitting data in TRANSFER-THROUGH mode, the data analysis module directly analyzes the transferred data. That is to say, regardless of whether it is the PASS-THROUGH MODE or the TRANSFER-THROUGH mode of the serial external interface, the data analysis module needs to perform data analysis. However, in the PASS-THROUGH mode, the PASS-THROUGH data is also mirrored and stored.

It should be noted that the PAS S-THROUGH mode here refers to the direct connection between the serial external device and the serial internal interface through the switch module 130, thereby directly connecting to the protected device. Other functional modules of the externally-connected protection device (including the content monitoring module 150) only serve as bypass access to achieve data monitoring of the direct access channel; The TRANSFER-THROUGH mode here refers to the serial external serial port device first connecting to the functional module of the externally-connected protection device (content monitoring module 150), and after data analysis and filtering by the security protection device, the externally-connected protection device forwards the compliant data to the protected device through the serial internal interface.

As shown in Figure 2, in this second embodiment, the content monitoring module 150 is also connected to the device type detection module 110. Due to the fact that in this embodiment, the predetermined connection type for USB external interface A2 is HID type USB external devices, and for HID type USB external devices, data transmission is carried out in PASS-THROUGH mode, the mirroring module of content monitoring module 150 is also used to mirror and store the data transmitted by the HID type USB external devices, and then the data analysis module performs data analysis on the mirrored data. For non HID type USB external devices of storage type or non storage type connected to USB external interfaces A1 and A3, the data analysis module directly analyzes the transmitted data. In order to mirror and store direct data or cache non PASS-THROUGH data for data analysis, both the mirroring module and data analysis module should have storage sub-modules for data storage.

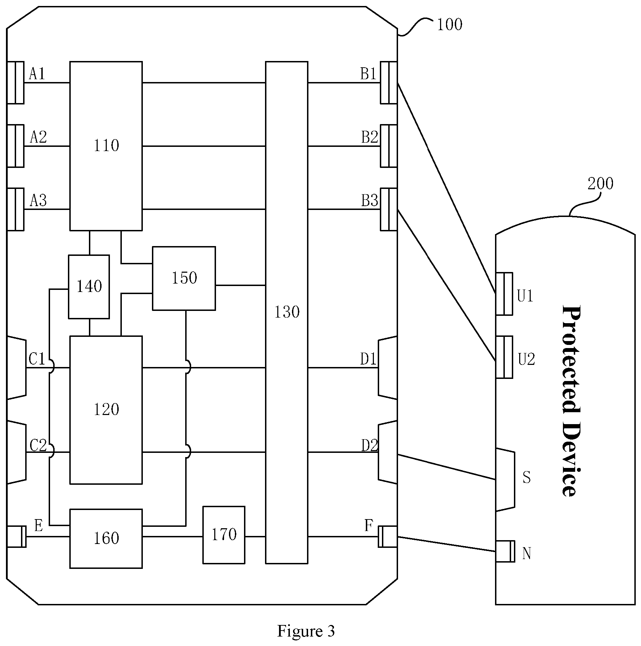

Figure 3 is a schematic diagram of the structure of a third embodiment of an externally-connected protection device based on interface detection according to the present invention. Unlike the first and second embodiments, the external interface of this third embodiment further includes a network external interface E, and the internal interface includes a network internal interface F connected to the external interface of the network. The network internal interface F is connected to the network external interface N of the protected device. The "network interface" in the present invention refers to the data interface connected to the network, such as the RJ-45 Ethernet interface, which complies with the IEEE802.3 standard and can also be an interface for telephone lines or optical fibers. Similar to the serial interface, if the protected device and the externally-connected protection device support two or more network ports, in order to enable the network protocol supported by the external network (which can be regarded as a special type of external device) to be adaptively connected to the corresponding network interface on the protected device 200 through the externally-connected protection device 100, the interconnected network external interface and network internal interface are network interfaces that support the same standard protocol.

Continuing to refer to Figure 3, in this third embodiment, the externally-connected protection device 100 further includes a network port detection module 160, which is used to detect the connection status of the network to the external interface E and send alarm message to the alarm module 140 according to the change in connection status. In this third embodiment, the network port detection module 160 is only used to detect whether the serial external device connected to the network external interface E has been unplugged. If it is detected that the network external interface E has been unplugged, an alarm message is sent to the alarm module 140. The alarm message sent by the network port detection module 160, the serial detection module 120, and the device type detection module 110 can be the same or different. When the message they send is different, the alarm module 140 can generate different alarm operations based on the different alarm message, such as different beeps.

Moreover, in this embodiment, the network port detection module 160 is also connected to the content monitoring module 150. Therefore, the content monitoring module 150 is also used to audit the data content from the external interface E of the network port, and instruct the switch module to connect or disconnect the external interface with the corresponding internal interface according to the content audit result. Therefore, as shown in Figure 3, the switch module 130 of this embodiment is also used to control the connecting-disconnecting of the data line of the network interface.

In this third embodiment, the externally-connected protection device 100 further includes a firewall module 170, which is used to perform legality detection on data received from the external interface of the network and send it to the internal interface of the network. Firewall module 170 is used to execute firewall programs. A firewall is a protective barrier that creates a barrier between the internal and external network environments, thereby blocking unsafe network factors of a computer. Only with the consent of the firewall, data from the external interface E of the network can be allowed to be transmitted and accessed to the protected device 200. Otherwise, it will be blocked. When external users access the computer, the firewall will quickly issue corresponding alerts. Network firewall technology is a mature existing technology and will not be further elaborated here.

In this embodiment, since both the content monitoring module 150 and the firewall module 170 are used to audit data from the network external interface E, as a variation, they can also be integrated into one module, for example, integrating the functions of the firewall module 170 into the content monitoring module 150.

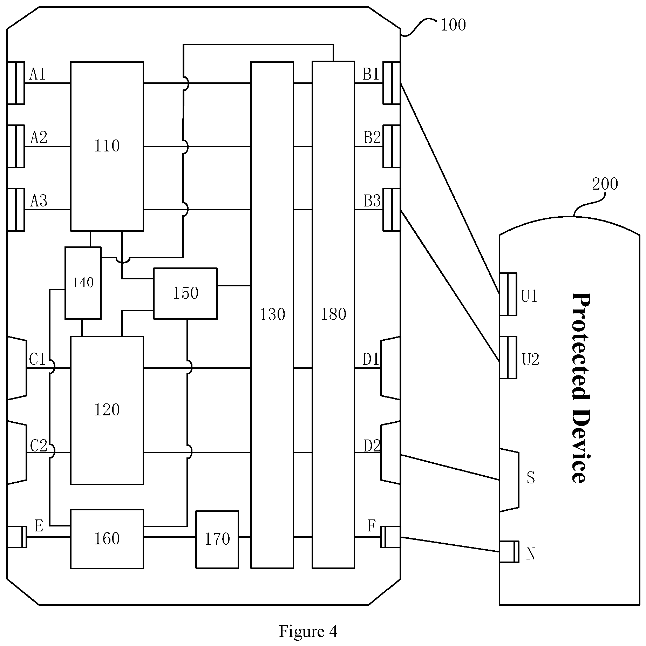

Figure 4 is a schematic diagram of the structure of a fourth embodiment of an externally-connected protection device based on interface detection according to the present invention.

This embodiment is a further improvement based on the third embodiment. The externally-connected protection device 100 of this embodiment also includes an plugged and unplugged detection module 180, which is used to detect the interface connection status of the internal port end. Specifically, in this fourth embodiment, the plugged and unplugged detection of the connection status of the connection line between the protected device and the externally-connected protection device plays a crucial role in ensuring the safety protection effect. Therefore, the plugged and unplugged detection module 180 not only checks whether the data lines connected to the internal interfaces have been unplugged, but also needs to check whether the data lines connected to each internal interface have been unplugged from the protected device 200, and send an alarm instruction to the alarm module 140 after detecting the unplugged status.

In order to detect the plugged and unplugged status, plugged and unplugged detection sensors, such as pressure sensors, can be installed on each pair of internal interfaces B1, B2, B3, D1, D2, F and the external interfaces U1, U2, S, N of the protected device. The plugged and unplugged signals detected by the pressure sensors are sent to the plugged and unplugged detection module 180 through a connection line. The plugged and unplugged detection module determines which interface has been illegally unplugged based on the received plugged and unplugged signals and sends an alarm instruction to the alarm module 140 accordingly.

In this embodiment, as mentioned earlier, the device type detection module 110, serial detection module 120, and network port detection module 160 are all capable of detecting the plugging and unplugging status of external interfaces. Therefore, the externally-connected protection device of the fourth embodiment of the present invention implements plugged and unplugged detection for all interfaces. This fully covered plug and unplug detection and monitoring can effectively prevent any illegal disconnection of lines between the externally-connected protection device and the protected device, and improve the safety performance of the protected device.

In other variant embodiments, the plugged and unplugged detection functions of the device type detection module 110, serial detection module 120, and network port detection module 160 can be integrated into the plugged and unplugged detection module 180. Therefore, the plugged and unplugged detection module 180 can simultaneously monitor all external and internal interfaces of the externally-connected protection device, as well as the plugged and unplugged status of the external interfaces of the protected device, and send alarm instructions when abnormalities are detected.

The specific embodiments described above provide further detailed explanations of the objectives, technical solutions, and beneficial effects of the present invention. It should be understood that the present invention is not inherently related to any specific computer, virtual device, or electronic device, and various general-purpose devices can also implement the present invention. The above description is only a specific embodiment of the present invention and is not intended to limit the present invention. Any modifications, equivalent substitutions, improvements, etc. made within the spirit and principles of the present invention should be included in the scope of protection of the present invention.

## Claims

1. An interface-detection-based externally-connected protection device, comprising internal interfaces (B1~B3, D1, D2), external interfaces (A1~A3, C1, C2), and a switch module (130), wherein:
The internal interfaces are used for connecting to the protected device (200);
The external interfaces are used for connecting to the external devices that need to access the protected device;
The external interfaces (A1~A3, C1, C2) are in one-to-one correspondence connection to the internal interfaces (B1~B3, D1, D2) by means of the switch module (130);
At least two of the external interfaces are used for connecting to a predetermined data transmission type of external device;
The type and quantity of the internal interfaces are compatible with the type and quantity of the external interfaces, and each internal interface is used for one to one connection to all external interfaces of the protected device;
The externally-connected protection device further comprises a device type detection module (110) and an alarm module (140);
The device type detection module (110) is used to detect the data transmission type of external device connected to any external interface, send an alarm instruction to the alarm module (140) according to the detection result, and instructs the switch module to connect or disconnect the external interface with the corresponding internal interface;
The alarm module (140) is used to perform alarm operations according to the received alarm instruction.

2. The interface-detection-based externally-connected protection device according to Claim 1, wherein the device type detection module (110) is further used for:
when the type of the detected external device is inconsistent with the predetermined data transmission type of the external interface, instructing the switch module to disconnect the connection between the external interface and the corresponding internal interface, and sending an alarm instruction to the alarm module;
when the detected type of external device matches the predetermined data transmission type of the external interface, instructing the switch module to connect the external interface with the corresponding internal interface.

3. The interface-detection-based externally-connected protection device according to Claim 2, further comprising a content monitoring module (150) for auditing the data content from the external interface, and instructing the switch module to connect or disconnect the external interface with the corresponding internal interface according to the content auditing result.

4. The interface-detection-based externally-connected protection device according to Claim 3, wherein the content monitoring module (150) comprises a mirroring module and a data analysis module, wherein the mirroring module is used for mirroring and storing direct data from the external interface, and the data analysis module is used for data analysis of all data from the external interface and sending alarm instructions to the alarm module (140) according to the analysis results.

5. The interface-detection-based externally-connected protection device according to Claim 4, wherein the external interface comprises a TRANSFER-THROUGH mode serial external interface and a PASS-THROUGH mode serial external interface, and the internal interface comprises a TRANSFER-THROUGH mode serial internal interface and a PASS-THROUGH mode serial internal interface corresponding one-to-one to the TRANSFER-THROUGH mode serial external interface and the PASS-THROUGH mode serial external interface;
The data analysis module is used for analyzing data from the TRANSFER-THROUGH mode serial external interface, and send alarm instructions to the alarm module (140) according to the analysis results.

6. The interface-detection-based externally-connected protection device according to Claim 5, wherein the mirroring module is used for mirroring and storing the PASS-THROUGH data from the PASS-THROUGH mode serial external interface;
The data analysis module is also used to analyze the direct data of the PASS-THROUGH mode serial external interface, and send alarm instructions to the alarm module (140) according to the analysis results.

7. The interface-detection-based externally-connected protection device according to any one of Claims 1 to 4, wherein the external interface comprises a USB external interface, and the internal interface comprises a USB internal interface corresponding one-to-one to the USB external interface, and the predetermined data transmission type of each USB external interface is the same as the type of USB external interface of the protected device connected to the corresponding USB internal interface.

8. The interface-detection-based externally-connected protection device according to Claim 7, wherein the USB external interface comprises at least two predetermined data transmission types from: storage type USB external interface, HID type USB interface, and non storage non HID type USB interface.

9. The interface-detection-based externally-connected protection device according to any one of Claims 1 to 4, wherein the external interface comprises a network external interface, and the internal interface comprises a network internal interface connected to the network external interface.

10. The interface-detection-based externally-connected protection device according to claim 9, further comprising a firewall module for detecting the legality of data received from the external interface of the network and sending it to the internal interface of the network.

11. The interface-detection-based externally-connected protection device according to any one of Claims 1 to 4, further comprising a plugged and unplugged detection module for: detecting whether the data lines or devices connected to each external interface are unplugged, detecting whether the data lines connected to the internal interface are unplugged, and detecting whether the data lines connected to the internal interface are unplugged from the USB external interface of the protected device, and sending an alarm instruction to the alarm module after detecting the unplugged status.

12. An interface-detection-based externally-connected protection method comprising the following steps:
Using an externally-connected protection device to take over all external interfaces of the protected device, so that the internal interfaces of the externally-connected protection device are connected one-to-one to all external interfaces of the protected device;
Connecting the external interfaces and internal interfaces of the externally-connected protection device one-to-one through switch modules, so that the type and quantity of the internal interfaces of the externally-connected protective device are compatible with the type and quantity of the external interfaces;
Determining at least two external interfaces for connecting predetermined data transmission types of external devices;
Detecting the type of external device connected to any external interface of the externally-connected protection device, and instruct the switch module to connect or disconnect the external interface with the corresponding internal interface according to the detection result;
Performing alarm operation based on the detection results.

13. The interface-detection-based externally-connected protection method according to Claim 12, further comprising:
When the detected type of external device does not match the predetermined data transmission type of the external interface, instructing the switch module to disconnect the external interface from the corresponding internal interface and performing an alarm operation;
When the detected type of external device matches the predetermined data transmission type of the external interface, instructing the switch module to connect the external interface with the corresponding internal interface.

14. The interface-detection-based externally-connected protection method according to Claim 13, further comprising:
Auditing the data content from the external interface and instruct the switch module to connect or disconnect the external interface with the corresponding internal interface according to the content audit results.

15. The interface-detection-based externally-connected protection method according to Claim 14, wherein the step of auditing the data content from the external interface comprises:
Mirroring and storing the PASS-THROUGH data from external interfaces, analyzing all data from external interfaces, and performing alarm operations according to the analysis results.

16. The interface-detection-based externally-connected protection method according to any one of Claims 12 to 15, further comprising: detecting whether the data lines or devices connected to each external interface are unplugged, detecting whether the data lines connected to the internal interface are unplugged, and detecting whether the data lines connected to the internal interface are unplugged from the external interface of the protected device, and performing an alarm operation after detecting the unplugged status.
